Europäisches Patentamt

European Patent Office

Office européen des brevets

(19)

(11) Veröffentlichungsnummer: **0 352 417**
**A2**

## (12) EUROPÄISCHE PATENTANMELDUNG

(21) Anmeldenummer: 89108365.1

(22) Anmeldetag: 10.05.89

(51) Int. Cl.⁴: **B64C 13/04 , G05G 9/04 , G05G 25/02**

(30) Priorität: 29.07.88 DE 3825809

(43) Veröffentlichungstag der Anmeldung:
**31.01.90 Patentblatt 90/05**

(84) Benannte Vertragsstaaten:
**DE ES GB IT**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Müller, Helmut**
**Steinbrechweg 2**
**D-8031 Eichenau(DE)**
Erfinder: **Baumgarten, Klaus**
**Hubertusstrasse 13**
**D-8011 Egiharting(DE)**

(54) **Steuereinrichtung mit einem Steuerknüppel.**

(57) Bei einer Steuereinrichtung mit einem Steuerknüppel(1) zur Betätigung je eines elektrischen Steuersignalgebers (2 bzw. 3) für die Nick- und Rollsteuerung eines Luftfahrzeugs ist dem Steuerknüppel (1) eine zur Rollachse (5) koaxiale Steuerwelle (6) für einen Rollsteuersignalgeber (3) zugeordnet und ist diese in einem Steuergestell (7) gelagert , welches über zwei gegenüber dem Steuerknüppel (1) unter einem rechten Winkel gekreuzt angeordnete, zur Nickachse (4) koaxiale Lagerzapfen (9), von denen einem ein Nicksteuersignalgeber (2) zugeordnet ist, an einem Trägergestell (8) drehbeweglich angeordnet ist. Dabei ist zum einen die Drehbeweglichkeit der Steuerwelle (6) durch einen über einen hierauf festsitzenden Hebel (10) betätigten, in achsparalleler Anordnung zum Steuerknüppel (1) am Steuergestell (7) angelenkten Federkraft-Arbeitszylinder (11) sowie einen der Steuerwelle (6) und dem Rollsteuersignalgeber (3) zwischengeschalteten Drehbewegungsdämpfer (12) beschränkt und ist zum anderen die Drehbeweglichkeit des Steuergestells (7) durch einen über einen zur Nickachse (4) rechtwinkligen Hebelfortsatz (7.2) des Steuergestells (7) betätigten, in paralleler Anordnung zur Rollachse (5) am Trägergestell angelenkten Federkraft-Arbeitszylinder (13) sowie einen einem der drehbeweglichen Lagerzapfen (9) zugeordneten Drehbewegungsdämpfer (14) beschränkt .

FIG. 1

## Steuereinrichtung mit einem Steuerknüppel

Die Erfindung betrifft eine Steuereinrichtung gemäß dem Oberbegriff des Patentanspruchs 1.

Mit derartigen Steuereinrichtungen wird bekanntlich das mechanische Signalübertragungs-Steuerwerk für die Betätigung beispielsweise von Steuerflächen, Auftriebsklappen, Bremsflächen u. dgl. eingespart. Allerdings werden elektromotorische Momentensimulatoren o. dgl. dem Piloten ein künstliches Steuergefühl vermittelnde elektrische Hilfsgeräte erforderlich, welche nicht nur komplizierter elektronischer Regelungen bedürfen und damit relativ störanfällig sind , sondern auch ein beträchtliches Bauvolumen beanspruchen.

Der Erfindung liegt daher die Aufgabe zugrunde, bei einer Steuereinrichtung der eingangs genannten Art auf mechanischem Wege mit hoher Ausfallsicherheit ein künstliches Steuergefühl für den Piloten o. dgl. Bediener bei der Betätigung des Steuerknüppels zu bewirken.

Diese Aufgabe ist für eine gattungsgemäße Steuereinrichtung mit den kennzeichnenden Merkmalen des Patentanspruchs 1 gelöst. Hiernach ist für den Steuerknüppel eine kardanische Gelenklagerung in einer solchen Ausgestaltung vorgesehen, daß sie eine Integration sowohl der elektrischen Steuersignalgeber als auch von zuverlässigen mechanischen Kraft- und Momentenwirkungsmitteln zu einer kompakten Baueinheit ermöglicht mit einer konstanten Übersetzung der Steuereingaben zwischen dem Steuerknüppel und den Steuersignalgebern. Dabei läßt sich durch den im Anspruch 2 gekennzeichneten Federkraft-Arbeitszylinder ohne weiteres sicherstellen, daß der Steuerknüppel nach jeder Betätigung spielfrei und reproduzierbar in seine Nullage (Ruhelage) zurückgeführt wird. Außerdem sind nicht nur für beide Steuerrichtungen je Federkraft-Arbeitszylinder verschiedene Federkennlinien wählbar, sondern ist auch noch durch die in den Ansprüchen 3 und 4 gekennzeichneten Ausgestaltungen des Federkraft-Arbeitszylinders für eine frei wählbare bestimmte Winkelstellung des Steuerknüppels eine Auslenkkraft mit Überhub simulierbar (sog.Overtravel-Funktion).

Schließlich lassen sich durch den Drehbewegungsdämpfer in der im Anspruch 5 gekennzeichneten Ausführungsform je Steuerachse abrupte Bewegungen des Steuerknüppels, wie ein unbeabsichtigtes plötzliches Zurückschnellen aus einer Betätigung, und ein Überschwingen desselben sicher ausschließen.

Die Erfindung wird nachfolgend anhand eines Ausführungsbeispiels weiter erläutert. Dabei zeigt die Zeichnung in

Fig. 1 in einer perspektivischen Ansicht eine Steuereinrichtung als kompakte Baueinheit,

Fig. 2 einen Längsschnitt durch einen Federkraft-Arbeitszylinder gemäß Fig. 1,

Fig. 3 einen Längsschnitt durch einen Drehbewegungsdämpfer gemäß Fig. 1.

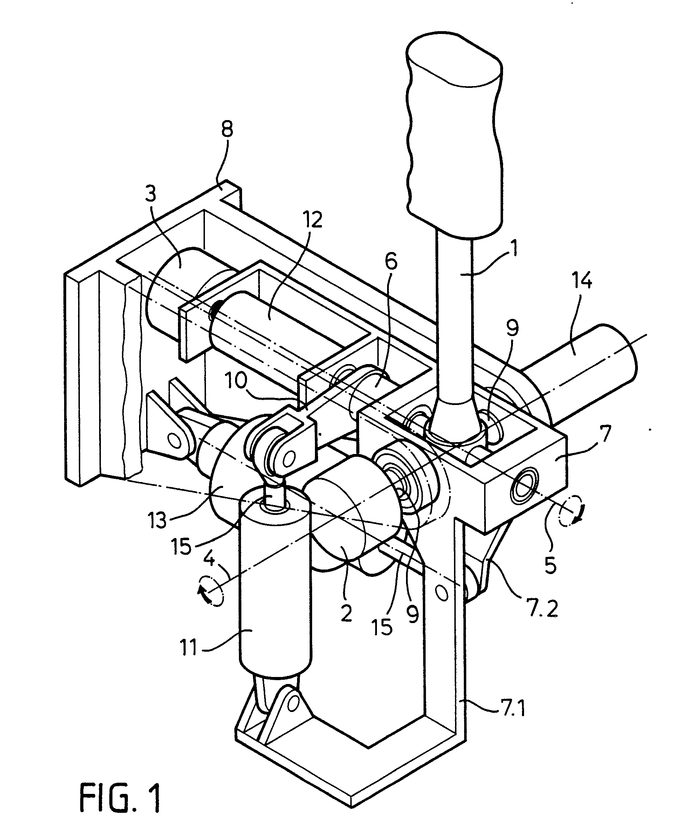

Beispielsweise zur Betätigung von nicht dargestellten Steuerflächen für die Nick- und Rollsteuerung eines Flugzeugs ist bei der Steuereinrichtung gemäß Fig. 1 einem Steuerknüppel 1 je ein elektrischer Nick- bzw. Rollsteuersignalgeber 2 bzw. 3 zugeordnet, z.B. induktive Winkelgeber. Um bei deren Betätigung durch den Steuerknüppel 1 dem Bediener (Pilot) ein Steuergefühl wie bei einer mechanischen Signalübertragung (zu den Steuerflächen) zu vermitteln, erfolgt die Übertragung der Steuerbewegungen des Steuerknüppels 1 um die Nick- und Rollachse 4 bzw. 5 auf den zugeordneten Nick- bzw. Rollsteuersignalgeber 2 bzw. 3 mittels einer kardanischen Gelenklagerung, deren Drehbeweglichkeit um beide Steuerachsen beschränkt ist:

Zum einen ist der Steuerknüppel 1 auf einer zur Rollachse 5 koaxialen Steuerwelle 6 für den Rollsteuersignalgeber 3 festsitzend angeordnet, welche in einem Steuergestell 7 gelagert ist. Dessen Drehbeweglichkeit um die Nickachse 4 ist durch eine Lagerung in einem Trägergestell 8 mittels zweier gegenüber dem Steuerknüppel 1 unter einem rechten Winkel gekreuzt angeordneter und zur Nickachse 4 koaxialer Lagerzapfen 9 sichergestellt. Über einen dieser drehbeweglichen Lagerzapfen 9 erfolgt die Betätigung des Nicksteuersignalgebers 2.

Zum anderen ist die Steuerwelle 6 über einen hierauf festsitzenden Hebel 10 mit einem Federkraft-Arbeitszylinder 11 gekoppelt, welcher in achsparalleler Anordnung zum Steuerknüppel 1 andererseits an einem Auslegerarm 7.1 des Steuergestells 7 angelenkt ist. Außerdem ist der Steuerwelle 6 und dem Rollsteuersignalgeber 3 ein Drehbewegungsdämpfer 12 zwischengeschaltet. Dagegen ist für die Drehbeweglichkeit des Steuergestells 7 ein Federkraft-Arbeitszylinder 13 bestimmend, welcher über einen zur Nickachse 4 rechtwinkligen Hebelfortsatz 7.2 des Steuergestells 7 betätigt wird und andererseits in paralleler Anordnung zur Rollachse 5 am Trägergestell 8 angelenkt ist. Außerdem ist einem der drehbeweglichen Lagerzapfen 9 ein Drehbewegungsdämpfer 14 zugeordnet.

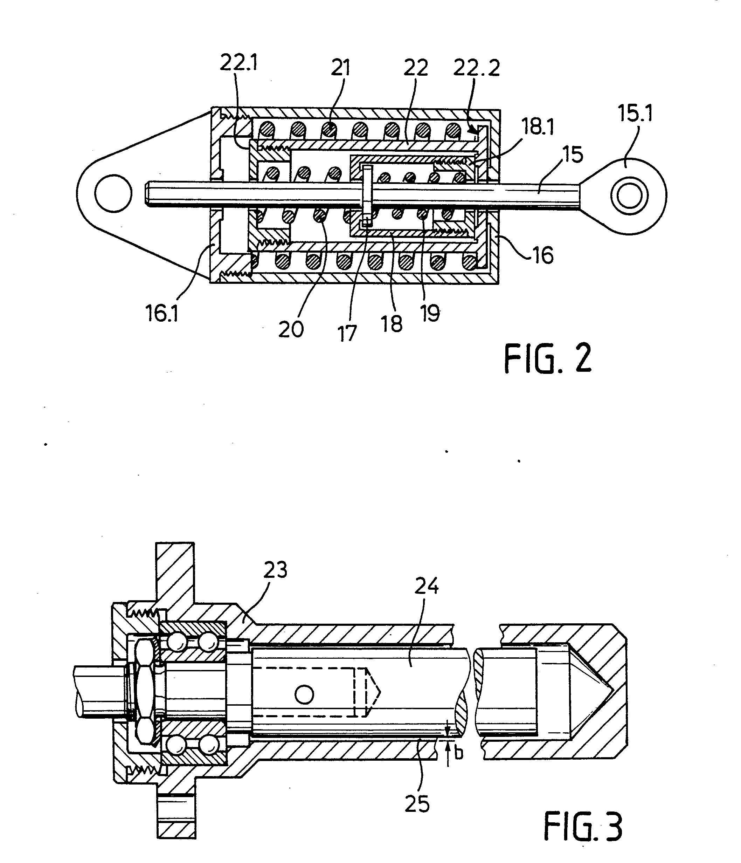

Um mit den Federkraft-Arbeitszylindern 11 und 13 in allen Steuerrichtungen des Steuerknüppels 1 Ausbrechkräfte simulieren zu können, weist gemäß Fig. 2 der einzelne Federkraft-Arbeitszylinder im Zylinderraum eine aus einer Ruhelage an der dem Betätigungsende 15.1 seiner Kolbenstange 15 zugewandten Zylinderbodenfläche 16 durch seinen Kolbenschieber 17 verschiebbare Hülse 18 und einer darin um die Kolbenstange 15 angeordnete erste Druckfeder 19 auf, welche sich, vorzugsweise unter einer vorbestimmten Druckvorspannung, einerseits gegen den Kolbenschieber 17 und andererseits gegen einen Hülsendboden 18.1 abstützt. Die Verschiebbarkeit der Hülse 18 wird durch eine zweite vorzugsweise auch definiert vorgespannte Druckfeder 20 beschränkt, welche um die Kolbenstange 15 zwischen der Hülse 18 und der dem Betätigungsende 15.1 der Kolbenstange 15 abgewandten zweiten Zylinderbodenfläche 16.1 angeordnet ist. Für die Simulierung einer Auslenkkraft des Steuerknüppels 1 mit Überhub ist schließlich noch eine dritte (vorzugsweise vorgespannte) Druckfeder 21 vorgesehen, weshalb die zweite Druckfeder 20 gemeinsam mit der Hülse 18 der ersten Druckfeder 19 in einer - aus der Ruhelage an der dem Betätigungsende 15.1 der Kolbenstange 15 zugewandten Zylinderbodenfläche 16 durch diese Hülse 18 verschiebbaren - zweiten Hülse 22 eingeschlossen ist. Hierbei ist deren dem Betägungsende 15.1 der Kolbenstange 15 abgewandter Hülsenboden 22.1 anstelle der zweiten Zylinderbodenfläche 16.1 die Stützbasis der zweiten Druckfeder 20, wobei die Verschiebbarkeit der zweiten Hülse 22 durch die um diese zwischen einer Stützfläche 22.1 derselben und der zweiten Zylinderbodenfläche 16.1 angeordnete dritte Druckfeder 21 beschränkt ist. Außerdem weist zweckmäßigerweise der Zylinderraum eine um die Länge des der zweiten Hülse 22 bestimmten Verschiebeweges größere Baulänge als diese Hülse 22 auf.

Schließlich ist der je Steuerachse 4, 5 bzw. Federkraft-Arbeitszylinder 13 bzw. 11 vorgesehene Drehbewegungsdämpfer 14 bzw. 12 gemäß Fig. 3 von solcher Bauart, bei welcher auch unter beträchtlichen Temperaturschwankungen Veränderungen der Dämpfungswirkung ausgeschlossen sind. Dazu ist in einem zylindrischen Gehäuse 23, welches bei dem einen Drehbewegungsdämpfer 14 entsprechend der rechten Teilansicht der Fig. 3 an einem Ende topfartig geschlossen, dagegen bei dem anderen Drehbewegungsdämpfer 12 entsprechend der linken Teilansicht der Fig. 3 an beiden Enden gleich gestaltet ist, ein Rotor 24 derart gelagert, daß dazwischen ein nach außen dichter Ringspalt 25 mit geringer Breite b, etwa von einem Zehntel Millimeter bei Normaltemperatur von ca. 20 °C, begrenzt wird, welcher mit einer nicht dargestellten Dämpfungsflüssigkeit, z.B. Silikonoel, gefüllt ist. Das Gehäuse 23 und der Rotor 24 bestehen hierbei aus bezüglich ihres temperaturabhängigen Ausdehnungskoeffizienten dermaßen verschiedenem Material, daß bei der gegebenen Viskosität der Dämpfungsflüssigkeit sich unter Temperaturänderungen die Ringspaltbreite b im Sinne einer konstanten Dämpfungswirkung ändert. Beispielsweise kann dazu als Material für das Gehäuse 23 Aluminium und als Material für den Rotor 24 Polytetrafluoräthylen gewählt werden.

## Ansprüche

1. Steuereinrichtung mit einem Steuerknüppel zur Betätigung je eines elektrischen Steuersignalgebers für die Nick- und Rollsteuerung eines Luftfahrzeugs, **dadurch gekennzeichnet,** daß dem Steuerknüppel (1) eine zur Rollachse (5) koaxiale Steuerwelle (6) für einen Rollsteuersignalgeber (3) zugeordnet und diese in einem Steuergestell (7) gelagert ist, welches über zwei gegenüber dem Steuerknüppel (1) unter einem rechten Winkel gekreuzt angeordnete, zur Nickachse (4) koaxiale Lagerzapfen (9), von denen einem ein Nicksteuersignalgeber (2) zugeordnet ist, an einem Trägergestell (8) drehbeweglich angeordnet ist, wobei zum einen die Drehbeweglichkeit der Steuerwelle (6) durch einen über einen hierauf festsitzenden Hebel (10) betätigten, in achsparalleler Anordnung zum Steuerknüppel (1) am Steuergestell (7) angelenkten Federkraft-Arbeitszylinder (11) sowie einen der Steuerwelle (6) und dem Rollsteuersignalgeber (3) zwischengeschalteten Drehbewegungsdämpfer (12) beschränkt ist und zum anderen die Drehbeweglichkeit des Steuergestells (7) durch einen über einen zur Nickachse (4) rechtwinkligen Hebelfortsatz (7.2) des Steuergestells (7) betätigten, in paralleler Anordnung zur Rollachse (5) am Trägergestell (8) angelenkten Federkraft-Arbeitszylinder (13) sowie einen einem der drehbeweglichen Lagerzapfen (9) zugeordneten Drehbewegungsdämpfer (14) beschränkt ist.

2. Steuereinrichtung nach Anspruch 1, **dadurch gekennzeichnet,** daß der Federkraft-Arbeitszylinder (11 bzw. 13) im Zylinderraum eine aus einer Ruhelage an der dem Betätigungsende (15.1) seiner Kolbenstange (15) zugewandten Zylinderbodenfläche (16) durch seinen Kolbenschieber (17) axial verschiebbare Hülse (18) und eine darin um die Kolbenstange (15) angeordnete, einerseits gegen den Kolbenschieber (17) und andererseits gegen einen Hülsenboden (18.1) abgestützte erste Druckfeder (19) aufweist, wobei die Verschiebbarkeit der Hülse (18) durch eine um die Kolbenstange (15) zwischen der Hülse (18) und der dem Betätigungsende (15.1) der Kolbenstange abgewandten zweiten Zylinderbodenfläche (16.1) angeordnete zweite Druckfeder (20) beschränkt ist.

3. Steuereinrichtung nach Anspruch 2, **dadurch gekennzeichnet,** daß die zweite Druckfeder (20) gemeinsam mit der Hülse (18) in einer aus der Ruhelage an der dem Betätigungsende (15.1) der Kolbenstange (15) zugewandten Zylinderbodenfläche (16) durch die Hülse (18) axial verschiebbaren zweiten Hülse (22) eingeschlossen ist, deren dem Betätigungsende (15.1) der Kolbenstange (15) abgewandter Hülsenboden (22.1) anstelle der zweiten Zylinderbodenfläche (16.1) die Stützbasis der zweiten Druckfeder (20) ist, und deren Verschiebbarkeit durch eine um die zweite Hülse (22) zwischen einer Stützfläche (22.2) derselben und der zweiten Zylinderbodenfläche (16.1) angeordnete dritte Druckfeder (21) beschränkt ist.

4. Steuereinrichtung nach Anspruch 3, **dadurch gekennzeichnet,** daß der Zylinderraum eine um die Länge des der zweiten Hülse (22) bestimmten Verschiebeweges größere Baulänge als diese Hülse (22) aufweist.

5. Steuereinrichtung nach Anspruch 1, **dadurch gekennzeichnet,** daß der Drehbewegungsdämpfer (12 bzw. 14) ein zylindrisches Gehäuse (23) und einen gegenüber diesem einen Ringspalt (25) für eine Dämpfungsflüssigkeit begrenzenden Rotor (24) aufweist, wobei das Gehäuse (23) und der Rotor (24) aus bezüglich des temperaturabhängigen Ausdehnungskoeffizenten dermaßen verschiedenem Material bestehen und die Dämpfungsflüssigkeit von solcher Viskosität ist, daß bei Temperaturänderungen sich die Breite des Ringspaltes (25) im Sinne einer konstanten Dämpfungswirkung über den Temperaturänderungsbereich ändert.

FIG. 1

10 521

22.1  21  22  22.2  18.1  15.1

15

16

18

16.1  20  17  18  19

**FIG. 2**

23  24

b

25

**FIG.3**

10 521